# EUROPÄISCHE PATENTSCHRIFT

(11) **EP 3 637 978 B1**
(45) Veröffentlichungstag und Bekanntmachung des Hinweises auf die Patenterteilung: **13.01.2021**
(21) Anmeldenummer: 19752989.4
(22) Anmeldetag: 02.08.2019
(51) Int. Cl.: A01D 34/135

(54) **DOPPELMESSER-SCHNEIDSYSTEM**
DOUBLE KNIFE CUTTING SYSTEM
SYSTÈME DE COUPE À DOUBLE LAME

(30) Priorität: 02.08.2018 DE 102018118815; 08.08.2018 DE 102018119326
(43) Veröffentlichungstag der Anmeldung: 22.04.2020
(73) Patentinhaber: ESM Ennepetaler Schneid- und Mähtechnik Gmbh & Co. KG, 58256 Ennepetal (DE)
(72) Erfinder: OEHLER, Wolfgang, 51688 Wipperfürth (DE); NÜRNBERG, Alexander, 58313 Herdecke (DE)
(74) Vertreter: Patentanwälte Dörner & Kötter PartG mbB
(86) Internationale Anmeldenummer: PCT/EP2019/070906
(87) Internationale Veröffentlichungsnummer: WO 2020/025798

(56) Entgegenhaltungen:
- DE-A1- 1 582 418
- DE-A1- 2 828 766
- DE-A1- 3 102 861
- DE-A1- 10 246 558
- DE-A1-102007 007 985

## Beschreibung

Die Erfindung betrifft ein Doppelmesser-Schneidsystem bestehend aus einem Balkenrücken, an dem ein Messerrücken für ein Obermesser und ein Messerrücken für ein Untermesser angeordnet sind, an denen eine Vielzahl von Doppelmesser-Schneidelementen befestigt sind, wobei Ober- und Untermesser oszillierend hin- und hergehend angetrieben sind, und an dem Balkenrücken Messerführungen für das Obermesser und Messerführungen für das Untermesser befestigt sind, die Führungsarme umfassen.

Doppelmesser-Schneidsysteme der eingangs genannten Art finden Anwendung, um Halmgüter aller Art wie Grünfutter, Sonderkulturen, Getreide, Gemüse oder dergleichen zu schneiden. Sie finden darüber hinaus Anwendung beim Schnitt von Hecken, Straßenbegleitgrün oder in der Gewässerpflege (an Gewässerrändern ebenso wie unter Wasser).

Ein Doppelmesser-Schneidsystem der eingangs genannten Art ist beispielsweise aus der DE 31 02 861 A1 bekannt, bei dem Ober- und Untermesser gegenläufig hin- und herbewegt werden. Mittels Doppelmesser-Schneidsystemen ist besonders bei nur geringer Antriebsleistung ein gutes Mähergebnis bei gleichzeitig großen Arbeitsbreiten erzielbar. Insbesondere ein sauberer, glatter, erschütterungsarmer Schnitt des Mähgutes zeichnet Doppelmesser-Schneidsysteme aus. Dies ist beispielsweise bei der Gewinnung von sauberem Futter sehr gewünscht und garantiert außerdem nachweislich einen optimalen Wiederaufwuchs des Ernteguts. Andere Doppelmesser-Schneidsyteme dieser Art sind auch aus DE 10 2007 007 985 A1, der DE 28 28 766 A1, sowie der DE 102 46 558 A1 bekannt.

Die bekannten Doppelmesser-Schneidsysteme weisen Schwinghebelführungen auf. Diese Schwinghebelführungen oszillierender Schneidsysteme führen die Mähmesser im Schneidwerk und sorgen mittels Federvorspannung für den erforderlichen Messerandruck. Beim Auftreten hoher Kräfte, bspw. bei einem Fremdkörperkontakt oder hohen dynamischen Antriebslasten auf die Mähmesser, kann es zu einer für die Schnittqualität negativen Verschiebung oder Verdrehung der Mähmesser kommen. Um solche Verschiebungen oder Verdrehungen zu begrenzen, finden Messerbegrenzungsführungen Anwendung. Diese ermöglichen die Begrenzung einer Messerbewegung relativ zum Balkenrücken, einer Mähmesserbewegung zueinander bzw. einer Schnittspaltbildung zwischen den Mähmessern sowie einer Verdrehung der Mähmesser relativ zum Balkenrücken.

Die bekannten oszillierenden Schneidsysteme verfügen nicht über eine Untermesserschwinghebelführung, welche eine effektive, integrierte Begrenzungsführung sowohl für den Führungsarm, als auch für die Mähmesser vorhält. Die bekannten Systeme weisen daher den Nachteil auf, dass zusätzlich zu den Schwinghebelmesserführungen separate Messerbegrenzungsführungen vorgesehen werden müssen, welche als statische Elemente mit ihrem Aufbau den Schnittgutfluss über und hinter der Schnittebene verschlechtern. Funktions-, bauraum-, und kostenbedingt werden im Grünfutterschnitt möglichst keine separaten Messerbegrenzungsführungen über die gesamte Schneidwerksbreite verteilt eingesetzt. In Folge dessen erfolgt abschnittsweise eine ungewollte Messerbewegung bzw. eine Begrenzung erfolgt nicht über die gesamte Arbeitsbreite des Schneidwerks, weshalb es zu partieller Schnittspaltbildung zwischen Ober- und Untermesser kommen kann. Zudem können die separaten Messerbegrenzungsführungen bauraumbedingt nicht in ihrer funktionsoptimalen Position, nämlich unmittelbar im Messerführungsbereich der Schwinghebel, angebracht werden. Separate Messerbegrenzungsführungen erfordern zudem zusätzliche, gehärtete Gleitleisten auf dem Messerrücken und führen somit zu einem aufwendigeren, schneidwerksspezifischen Messeraufbau. Darüber hinaus erfordern die separaten Messerbegrenzungsführungen gesonderte Nietlängen, Nietprozesse und gegebenenfalls Nachschleifarbeiten zur Bereitstellung der Gleitleisten.

Auch können die separaten Messerbegrenzungsführungen die Untermesserführungsarme nur unzureichend gegen plastische Verformung und vor hohen Lagerbelastungen schützen. Sowohl plastisch als auch elastisch verformte Untermesserführungsarme reduzieren den Obermesserführungsarmandruck und fördern bzw. verursachen vorzeitige Schnittspaltbildung und führen somit zu vorzeitiger Schnittqualitäts- und Standzeiteinbußen. Außerdem führen verformte Untermesserführungsarme zu einer wellenförmigen Ausrichtung des Untermessers zum Obermesser im Schneidwerk. Dynamische Wechsellasten führen folglich frühzeitig zu Schnittspalten, Materialermüdung und Klingenverschleiß. Hohe Aushubgeschwindigkeiten von seitenauslegenden (nur einseitig geführten) Schneidwerken haben hohe Balkenrücken- und Messerverformungen zur Folge, welche durch separate Messerbegrenzungsführungen nur unzureichend kompensiert werden.

Aus der DE 15 82 418 A ist eine Untermesserführung bekannt, bei der, das Untermesser an zwei Punkten am Untermesser-Führungsarm abgestützt ist. Dadurch ist ein Kippen der Messer verhindert. Die CH 374 848 A beschreibt ebenfalls eine Untermesserführung. Sie bedient sich eines Sicherungsnockens, der am Untermesser-Führungsarm angeordnet ist und die Rücken der beiden aufeinanderliegenden Messer umgreift, wodurch ein Kippen der Messer verhindert ist. Aus der DE 296 15 068 U1 ist ein Mähschneidwerk bekannt, bei dem durch die Lagerung des Obermessers im Mähbetrieb nach hinten gerichtete Kräfte ein Kippmoment auf das Obermesser ausgeübt wird, welches die Klingen des Obermessers im Schnittbereich auf die Klingen des Untermessers drückt. Die bekannten Lösungen können jedoch ein Ausweichen der gesamten Anordnung aus Ober- und Untermesser im Falle eines Fremdkörperkontaktes oder hoher dynamischer Antriebslasten auf die Mähmesser im Verhältnis zur Umgebung nicht verhindern.

Vor diesem Hintergrund ist es Aufgabe der vorliegenden Erfindung, mit minimalem Material- und Kostenaufwand die Messerführung oszillierender Schneidsysteme gezielt zu verbessern, um auch ein Ausweichen der gesamten Einheit aus Ober- und Untermesser zu verhindern und so die Standzeit oszillierender Schneidsysteme zu erhöhen. Gelöst wird diese Aufgabe mit den Merkmalen des Patentanspruchs 1.

Mit der Erfindung ist ein Doppelmesser-Schneidsystem geschaffen, das durch das Vorsehen von Begrenzungsführungen an den Messerführungen für das Untermesser eine Bewegung des Führungspakets aus Ober- und Untermesserführung verhindert. Somit ist auch ein Ausweichen der gesamten Anordnung aus Ober- und Untermesser im Falle eines Fremdkörperkontaktes oder hoher dynamischer Antriebslasten auf die Mähmesser im Verhältnis zur Umgebung verhindert. Dadurch ist mit minimalem Material- und Kostenaufwand die Messerführung oszillierender Schneidsysteme gezielt verbessert. Zudem ist die Standzeit oszillierender Schneidsysteme erhöht. Gleichzeitig wird eine höhere Schlagkraft erzielt. Zudem sind geringere Wartungsintervalle erforderlich, wodurch das erfindungsgemäße Doppelmesser-Schneidsystem Wettbewerbsvorteile gegenüber den aus dem Stand der Technik bekannten Systemen hat.

Die Begrenzungsführungen bestehen dabei jeweils aus einem Reibelement und einer Gleitplatte. Die aus zwei Teilen bestehenden Begrenzungsführungen ermöglichen ein abgestimmtes Zusammenwirken, was eine Verschleißreduzierung auch im Bereich der Begrenzungsführungen selbst hervorruft.

Die Reibelemente sind erfindungsgemäß an den Führungsarmen der Messerführungen für das Untermesser angeordnet und die Gleitplatten an dem Balkenrücken. Hierdurch ist gewährleistet, dass die gegeneinander bewegbaren Baugruppen der Doppelmesser-Schneidsysteme kooperieren und so effektiv Schneidwerks- und Messerverformungen entgegenwirken.

In Weiterbildung der Erfindung sind die Aufnahmen für die Führung der Schneidelemente des Untermessers um einen Betrag x1 in die dem Balkenrücken abgewandte Richtung versetzt zu den Aufnahmen für die Führung der Schneidelemente des Obermessers angeordnet. Hierdurch ist die Gefahr einer Schnittspaltbildung zwischen Ober- und Untermesser zusätzlich reduziert, wodurch sowohl die Standzeiten als auch die Messerführung verbessert sind. Zwar zeigt die DE 15 82 418 A eine nach vorne verlagerte Aufnahme für einen Zapfen am Untermesser-Schneidelement; allerdings weist die Untermesserführung bei dem darin beschriebenen Mähwerk eine zweite Aufnahme für einen Zapfen am Untermesser-Schneidelement bzw. einen Stütznocken in dem dem Balkenrücken zugewandten Bereich auf. Somit ist, anders als bei der vorliegenden Erfindung, eine starre Abstützung zwischen Ober- und Untermesser hervorgerufen, bei der die Stützkraft der Obermesserführung zwischen die beiden Abstützpunkte des Untermessers einwirken. Dadurch ist jedoch nicht verhindert, dass das gesamte Paket aus Ober- und Untermesser beispielsweise im Falle eines Fremdkörperkontaktes im Verhältnis zur Umgebung ausweichen kann. Das ist bei dem Doppelmesser-Schneidsystem nach der vorliegenden Erfindung durch Führung mit nur jeweils einer Aufnahme für Ober- und Untermesser, welche um den Betrag x1 versetzt zueinander angeordnet sind, verhindert. Der erfindungsgemäße Versatz erzeugt ein Drehmoment, welches auf die Klingenvorderseite in Richtung Balkenrückenoberseite ausrichtend wirkt, wodurch eine vertikal nach unten ausgerichtete Bewegung des Pakets aus Ober- und Untermesser und vorteilhaft das Abtauchen des Untermessers verhindert ist.

Andere Weiterbildungen und Ausgestaltungen der Erfindung sind in den übrigen Unteransprüchen angegeben. Ausführungsbeispiele der Erfindung sind in den Zeichnungen dargestellt und werden nachfolgend im Einzelnen beschrieben. Es zeigen:
- Figur 1: die abschnittsweise Draufsicht auf ein Doppelmesser-Schneidsystem;
- Figur 2: die Seitenansicht einer Messerführung für das Untermesser;
- Figur 3: die Draufsicht auf die in Figur 2 dargestellte Messerführung;
- Figur 4: die dreidimensionale Darstellung der in Figur 2 dargestellten Messerführung;
- Figur 5: die dreidimensionale Darstellung der in Figur 2 dargestellten Messerführung aus einer anderen Perspektive;
- Figur 6: den Schnitt entlang der Linie A-A in Figur 1;
- Figur 7: die vergrößerte Darstellung der Einzelheit "X" in Figur 6;
- Figur 8: die Seitenansicht einer Messerführung für das Untermesser in anderer Ausgestaltung;
- Figur 9: die vergrößerte Darstellung der Einzelheit "X" in Figur 8.

Das als Ausführungsbeispiel gewählte Doppelmesser-Schneidsystem besteht aus einem Balkenrücken 1 an dem ein Messerrücken 2 für ein Obermesser 4 und ein Messerrücken 3 für ein Untermesser 5 angeordnet sind. An dem Messerrücken 2 für das Obermesser 4 ist eine Vielzahl von Doppelmesser-Schneidelementen 6 befestigt; an dem Messerrücken 3 für das Untermesser 5 ist eine Vielzahl von Doppelmesser-Schneidelementen 7 angeordnet. Die Doppelmesser-Schneidelemente 6 und 7 sind mittels Befestigungsmitteln 8 an den Messerrücken 2, 3 befestigt.

An dem Balkenrücken 1 sind Messerführungen 10 für das Obermesser 4 und Messerführungen 110 für das Untermesser 5 befestigt. Die Messerführungen 10, 110 umfassen Führungsarme 11, 111. Die Führungsarme 11 weisen Federeigenschaften auf, wodurch das Obermesser 4 mit seinen Schneidelementen 6 gegen das Untermesser 5 mit seinen Schneidelementen 7 gedrückt wird.

An den freien Enden der Führungsarme 11, 111 sind Buchsen 12, 112 vorgesehen, die Aufnahmen 13, 113 in Form von Hohlzapfen aufweisen. Die Aufnahmen 13, 113 wirken mit Führungszapfen 61, 71 der Doppelmesser-Schneidelemente 6, 7 zusammen. An den den Buchsen 12, 112 abgewandten Enden sind die Führungsarme 11, 111 in Führungsbaugruppen 15, 115 befestigt. Die Führungsbaugruppen 15, 115 umfassen ein Gehäuse, welches Bestandteil eines Halters 16, 116 ist. Die Halter 16, 116 sind mit dem Balkenrücken 1 mit Hilfe von Schrauben 17, 117 verschraubt.

Die Messerführungen 110 für das Untermesser 5 sind mit Begrenzungsführungen 9 zur Begrenzung einer vertikalen Bewegung der Messerführungen 110 versehen. Die Begrenzungsführungen 9 bestehen jeweils aus einem Reibelement 91 und einer Gleitplatte 92. Die Reibelemente 91 und die Gleitplatten 92 bestehen in den Ausführungsbeispielen aus gehärtetem Stahl. Die Reibelemente 91 und die Gleitplatten 92 können mit einer verschleißmindernden Beschichtung versehen sein.

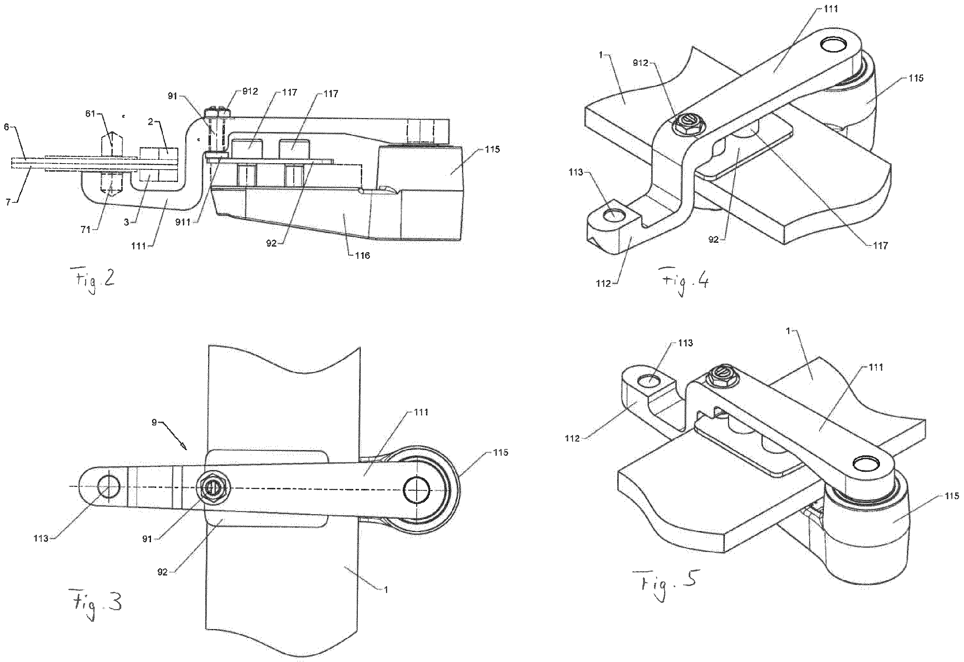

Die Reibelemente 91 sind an den Führungsarmen 111 der Messerführungen 110 für das Untermesser 5 angeordnet. Im Ausführungsbeispiel sind sie mit den Führungsarmen 111 verschraubt. Die Reibelemente 91 sind hierfür als Gewindebolzen ausgebildet, die jeweils eine Bohrung in den Führungsarmen 111 durchsetzen und die im Ausführungsbeispiel nach den Figuren 2 bis 5 an ihrem dem Balkenrücken 1 zugewandten Ende mit einem Teller 911 versehen sind, wobei Gewindebolzen und Teller in diesem Ausführungsbeispiel einteilig ausgebildet sind. Auf ihrer dem Teller 911 abgewandten Seite ist in montiertem Zustand jeweils eine Mutter 912 aufgeschraubt.

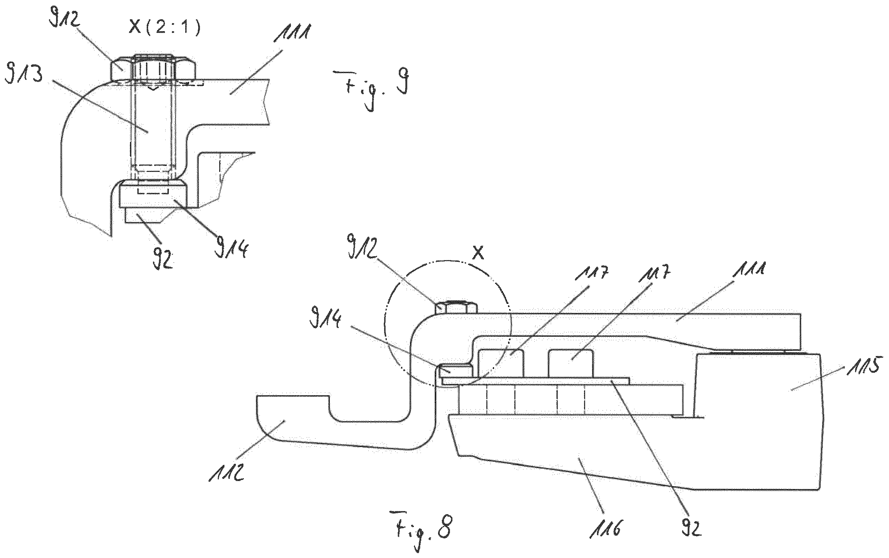

Im Ausführungsbeispiel nach den Figuren 8 und 9 ist anstelle eines Tellers als Bestandteil des einteiligen Reibelements das Reibelement mehrteilig ausgebildet, indem der Schaft durch eines Stiftschraube 913 ausgebildet ist, deren der Gleitplatte 92 zugewandtes Ende in eine tellerförmige und auf diese Weise gegen die Gleitplatte 92 gestützte, verlustgesicherte Stützscheibe 914 eingreift. Diese Sicherung erfolgt, indem die Stiftschraube 913 an ihrem der Gleitplatte 92 zugewandten Ende mit einer Verjüngung versehen ist, die in eine Sacklochbohrung in der Stützscheibe 914 eingreift (vgl. Figur 9). Die Sicherung ist durch das Zusammenspiel aus dem Führungsarm 111, dem Reibelement 91 aus Mutter 912, Stiftschraube 913 sowie Stützscheibe 914 und der Gleitplatte 92 hervorgerufen. Die Stützscheibe 914 ist folglich ohne zusätzliche Maßnahmen zwischen Stiftschraube 913 und Gleitplatte 92 zuverlässig gesichert. Die beschriebene Ausführung hat zudem den Vorteil, dass ein Austausch der Stützscheibe 914 in einfacher Weise dadurch erfolgen kann, dass die Mutter 912 von der Stiftschraube 913 gelöst wird und durch bereichsweises Herausschrauben der Stiftschraube aus dem Führungsarm 111 die Stützscheibe 914 freigegeben wird, die auf der Gleitplatte 92 liegen bleibt. Sie kann in diesem Zustand einfach aus dem Bereich zwischen Führungsarm 111 und Gleitplatte 92 entfernt werden und durch eine neue Stützscheibe 914 ersetzt werden. Alternativ ist eine plattenförmige Ausgestaltung des Reibelements möglich.

Die Gleitplatten 92 sind auf dem Balkenrücken 1 angeordnet. Sie sind im Ausführungsbeispiel mit dem Balkenrücken 1 verschraubt. Hierzu sind die Gleitplatten 92 jeweils mit zwei Löchern versehen, die in montiertem Zustand von den Schrauben 117 durchsetzt sind. In Abwandlung des Ausführungsbeispiels können die Gleitplatten 92 auch geklemmt fixiert sein. Die Gleitplatten 92 haben in den Ausführungsbeispielen jeweils eine rechteckige Form. Andere Formen sind jedoch ebenfalls möglich.

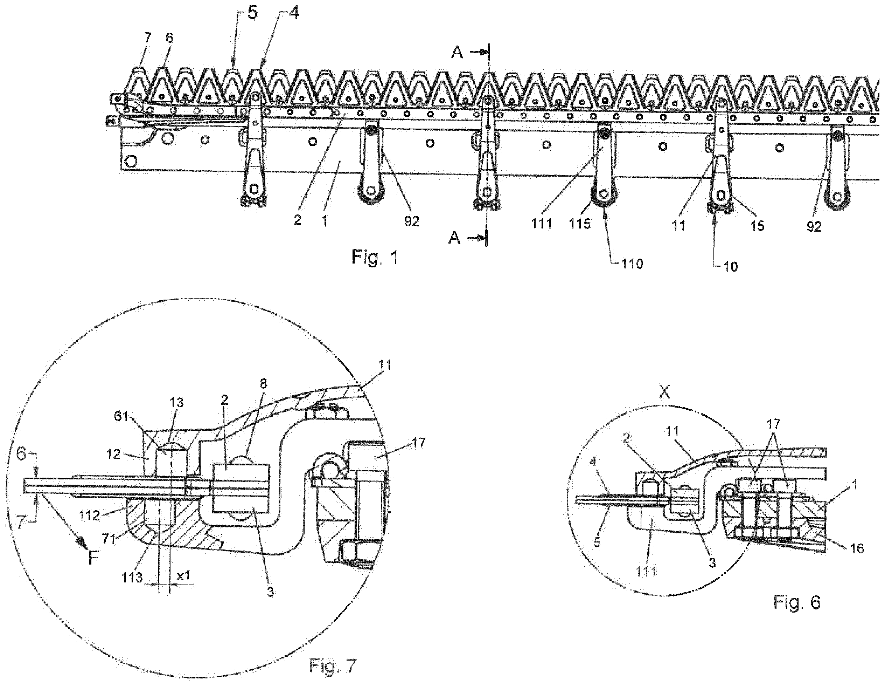

Im Ausführungsbeispiel nach den Figuren 6 und 7 sind die Aufnahmen 113 für die Führung der Schneidelemente 7 des Untermessers 5 um einen Betrag x1 in die dem Balkenrücken 1 abgewandte Richtung versetzt zu den Aufnahmen 13 für die Führung der Schneidelemente 6 des Obermessers 4 angeordnet. Die Aufnahme 113 des Untermessers 5 ist folglich um den Betrag x1 in Fahrtrichtung nach vorne verlagert. Die Andruckkraft der Obermesserführungsarme 11 wirkt der in Figur 6 mit F gekennzeichneten Schnittkraft entgegen. Die Andrucckraft erzeugt somit ein stetiges Drehmoment um die untere Aufnahmeebene, mit welchem das Untermesser 5 kippstabilisiert wird.

Der Betrag x1 ist vorteilhaft so gewählt, dass der Schnittspaltbildung auch bei phasengleich arbeitenden Schneidwerken effektiv entgegen gewirkt werden kann. Der Betrag x1 ist vorteilhaft darüber hinaus so gewählt, dass ein Nachschleifen des Untermessers 5 auch ohne eine Beschädigung der Führungszapfen 71 durch die Schleifscheibe erfolgen kann.

Die Begrenzungsführung 9 ist direkt unter bzw. im Bewegungsschatten einzelner Untermesserführungsarme 111 angeordnet und mit diesen austausch- und stufenlos verstellbar befestigt. Der führungsarmseitige Teil der Begrenzungsführung 9 kann in Abwandlung des Ausführungsbeispiels auch durch einen Bolzen, ein Lager, eine Schraube oder eine Platte gebildet sein. Im Ausführungsbeispiel ist im Ruhezustand des Doppelmesser-Schneidsystems zwischen dem führungsarmseitigen Teil der Begrenzungsführung 9 in Form des Tellers 911 des Reibelementes 91 und dem balkenseitigen Teil der Begrenzungsführung 9 in Form der Platte 92 ein Spalt von ca. 0,5 mm ausgebildet. Eine gerade berührende, spielfreie Einstellung ist ebenfalls möglich.

Wirkt eine Schnittkraft F auf das Schneidsystem bzw. auf den Untermesserführungsarm 111, so hat dies theoretisch eine Verformung des Untermesserführungsarms nach unten bzw. in Kraftrichtung zur Folge. Diese Verformung wird durch die Begrenzungsführung 9 in ihrer Größe auf einen einstellbaren Wert im elastischen Verformungsbereich des Führungsarms limitiert. Durch diese Begrenzung wird die vertikale Verformung des Untermesserführungsarms 111 begrenzt, der Führungsarm bzw. sein Lager entlastet und das Messerpaket stabilisiert. Die Gleitreibung erfolgt im vorliegenden Fall zwischen dem Reibelement 91 welches am Untermesserführungsarm 111 befestigt ist und der mit dem Balkenrücken 1 verbundenen Gleitplatte 92.

Das Reibelement 91 ist höhenverstellbar und kann daher bei übermäßigem Verschleiß nachgestellt werden. Dies kann im Ausführungsbeispiel durch Drehen im Gewinde stufenlos erfolgen. Das Reibelement 91 ist vorteilhaft so ausgelegt, dass die Flächenpressung bzw. die Gleitreibung zur Gleitplatte 92 minimiert wird. Die Gleitplatte 92 kann bei übermäßigem Verschleiß zunächst unter Beibehaltung der Auflagefläche um 180° gedreht und danach umgeschlagen werden. Es ergeben sich somit für jede Gleitplatte 92 jeweils vier neuwertige Reiboberflächen. Erst wenn alle vier Gleitflächen verschlissen sind, ist ein Austausch der jeweiligen Gleitplatte erforderlich. Die Gleitplatte 92 ist vorteilhaft geometrisch so dimensioniert, dass in jeder Hubposition der Führungsarme 111 eine Auflage der Reibelemente 91 auf den Gleitplatten 92 gewährleistet. Die hintere Lagerung der Untermesserführungsarme 111 in den Führungsbaugruppen 115 wird dadurch stark entlastet.

Die erfindungsgemäße Begrenzungsführung für oszillierende Schneidsysteme reduziert die Bildung und Größe von Schnittspalten und erhöht somit die Schnittqualität und die Standzeit des Schneidwerkes. Besonders hoch belastete Schneidwerke, wie z.B. beidseitig angetriebene Portalschneidwerke, Schneidwerke mit großen Arbeitsbreiten, bodennah geführte Schneidwerke und Unterwasser-, Ast- und andere hochbelastete Sonderschneidanwendungen, profitieren in hohen Maße von der Einbringung der integrierten Begrenzung. Durch die erfindungsgemäße integrierte Bauweise wird der Untermesserführungsarm bei starken Belastungen entlastet. Plastischen Verformungen und Lagerschäden kann so vorgebeugt werden.

Darüber hinaus besteht die Möglichkeit, die Begrenzungsführung bei Verschleiß nachzustellen, auszutauschen bzw. auf Umschlag zu montieren. Durch die integrierte Bauweise kann erstmals eine für die Messerführung optimale Anzahl von Begrenzungsführungen über die gesamte Messerlänge eingesetzt werden bzw. an hoch beanspruchten Stellen positioniert werden. Weiterhin entfällt durch die integrierte Bauweise der Begrenzungsführung der negative statische Einfluss der aus dem Stand der Technik bekannten Begrenzungsführungen auf den Schnittgutfluss. Die oszillierenden Schwinghebel sorgen hier für eine optimale Gutflussräumung vor und über der Begrenzungsführung. Bei Doppelmesserschneidwerken führt die effektivere Messerbegrenzungsführung des Weiteren zu reduzierter Schnittkraft, reduzierter Untermesserverdrehung und dadurch bedingter Schnittspaltbildung. Erweiterte Schneidzyklen mit verrundeten und stumpferen Schneidkanten sind hierdurch ermöglicht.

Die erfindungsgemäße Begrenzungsführung führt bei hoch dynamisch bewegten Schneidwerken, wie bspw. bei Aushubvorgängen am Seitenausleger, zu einer besseren Messerführung und somit zu einer geringeren Messer- und Führungsarmbelastung.

Die Ausgestaltung der Schwinghebelführung für oszillierende Doppelmesser-Schneidsysteme nach den Figuren 6 und 7 erweitert die Vorteile zu bekannten Schwinghebelführungen an Doppelmessersystemen. So wird der Bildung von Schnittspalten eine Gegenkraft bzw. ein Gegenmoment entgegengehalten. Die Reduzierung der Schnittspaltbildung verbessert die Schlagkraft und die Schnittqualität der oszillierenden Schneidtechnik. Die Reduzierung der Schnittspaltbildung verringert zudem den Schneidkantenverschleiß und erhöht somit die Standzeit der Schneidelemente von Schliff zu Schliff. Die Reduzierung der dynamischen, kardanischen Bewegung reduziert den Verschleiß an den Aufnahmen 13, 113 und den Führungszapfen 61, 71. Die Gefahr eines dynamischen Abhebens und Aufeinanderschlagens der Schneidelemente wird durch das stetig wirkende Gegenmoment reduziert. Der Verschleiß der Schneidelemente durch den rein mechanisch/-metallischen Kontakt von Obermesser 4 und Untermesser 5 wird ebenfalls reduziert. Auch die dynamischen Belastungen auf Messerrücken und Messerkopf werden reduziert. Durch die erweiterte Standzeit der Schneidkomponenten werden Ressourcen geschont und somit die Umwelt entlastet.

## Patentansprüche

1. Doppelmesser-Schneidsystem bestehend aus einem Balkenrücken (1), an dem ein Messerrücken (2) für ein Obermesser (4) und ein Messerrücken (3) für ein Untermesser (5) angeordnet sind, an denen eine Vielzahl von Doppelmesser-Schneidelementen (6, 7) befestigt sind, wobei Obermesser (4) und Untermesser (5) oszillierend hin- und hergehend angetrieben sind, und an dem Balkenrücken (1) Messerführungen (10) für das Obermesser (4) und Messerführungen (110) für das Untermesser (5) befestigt sind, die Führungsarme (11, 111) umfassen, **dadurch gekennzeichnet, dass** die Messerführungen (110) für das Untermesser (5) mit Begrenzungsführungen (9) versehen sind, die jeweils aus einem Reibelement (91) und einer Gleitplatte (92) bestehen, wobei die Reibelemente (91) an den Führungsarmen (111) der Messerführungen (110) für das Untermesser (5) angeordnet sind und die Gleitplatten (92) auf dem Balkenrücken (1) angeordnet sind.

2. Doppelmesser-Schneidsystem nach Anspruch 1, **dadurch gekennzeichnet, dass** die Reibelemente (91) mit den Führungsarmen (111) verschraubt sind.

3. Doppelmesser-Schneidsystem nach einem der vorgenannten Ansprüche, **dadurch gekennzeichnet, dass** die Gleitplatten (92) mit dem Balkenrücken (1) verschraubt oder geklemmt fixiert sind.

4. Doppelmesser-Schneidsystem nach einem der vorgenannten Ansprüche, **dadurch gekennzeichnet, dass** die Reibelemente (91) und die Gleitplatten (92) aus gehärtetem Stahl bestehen.

5. Doppelmesser-Schneidsystem nach einem der vorgenannten Ansprüche, **dadurch gekennzeichnet, dass** die Reibelemente (91) und die Gleitplatten (92) mit einer verschleißmindernden Beschichtung versehen sind.

6. Doppelmesser-Schneidsystem nach einem der vorgenannten Ansprüche, **dadurch gekennzeichnet, dass** die Reibelemente (91) mehrteilig ausgebildet sind.

7. Doppelmesser-Schneidsystem nach nach einem der vorgenannten Ansprüche, **dadurch gekennzeichnet, dass** die Reibelemente (91) von einer Stiftschraube (913) gebildet sind, deren der Gleitplatte (92) zugewandtes Ende in eine Stützscheibe (914) eingreift.

8. Doppelmesser-Schneidsystem nach Anspruch 7, **dadurch gekennzeichnet, dass** die Stiftschraube (913) an ihrem der Gleitplatte (92) zugewandten Ende mit einer Verjüngung versehen ist, die in eine Sacklochbohrung in der Stützscheibe (914) eingreift.

9. Doppelmesser-Schneidsystem nach einem der vorgenannten Ansprüche, **dadurch gekennzeichnet, dass** an den dem Balkenrücken (1) abgewandten Enden der Führungsarme (11, 111) Aufnahmen (13, 113) für die Führung der Schneidelemente (6, 7) vorgesehen sind.

10. Doppelmesser-Schneidsystem nach Anspruch 9, **dadurch gekennzeichnet, dass** die Aufnahmen (113) für die Führung der Schneidelemente (7) des Untermessers (5) um einen Betrag x1 in die dem Balkenrücken (1) abgewandte Richtung versetzt zu den Aufnahmen (13) für die Führung der Schneidelemente (6) des Obermessers (4) angeordnet sind.

## Claims

1. Double knife cutting system consisting of a bar back (1), on which a knife back (2) for an upper knife (4) and a knife back (3) for a lower knife (5) are arranged, to which a plurality of double knife cutting elements (6, 7) are attached, wherein upper knife (4) and lower knife (5) are driven by an oscillating back and forth motion and knife guides (10) for the upper knife (4) and knife guides (110) for the lower knife (5) are attached to the bar back (1), which comprise guide arms (11, 111), **characterised in that** the knife guides (110) for the lower knife (5) are provided with limiting guides (9), which each consist of a friction element (91) and a slide plate (92), wherein the friction elements (91) are arranged at the guide arms (111) of the knife guides (110) for the lower knife (5) and the slide plates (92) are arranged on the bar back (1).

2. Double knife cutting system according to claim 1, **characterised in that** the friction elements (91) are screwed to the guide arms (111).

3. Double knife cutting system according to one of the previous claims, **characterised in that** the slide plates (92) are screwed or fixed in a clamped manner to the bar back (1).

4. Double knife cutting system according to one of the previous claims, **characterised in that** the friction elements (91) and the slide plates (92) consist of hardened steel.

5. Double knife cutting system according to one of the previous claims, **characterised in that** the friction elements (91) and the slide plates (92) are provided with a wear-reducing coating.

6. Double knife cutting system according to one of the previous claims, **characterised in that** the friction elements (91) are of multi-part design.

7. Double knife cutting system according to one of the previous claims, **characterised in that** the friction elements (91) are formed by a stud (913), whose end facing the slide plate (92) engages in a supporting disc (914).

8. Double knife cutting system according to claim 7, **characterised in that** the stud (913) is provided with a taper at its end facing the slide plate (92), which taper engages in a blind hole in the supporting disc (914).

9. Double knife cutting system according to one of the previous claims, **characterised in that** at the ends of the guide arms (11, 111) facing away from the bar back (1), receptacles (13, 113) are provided for the guide of the cutting elements (6, 7).

10. Double knife cutting system according to claim 9, **characterised in that** the receptacles (113) for the guide of the cutting elements (7) of the lower knife (5) are arranged offset with respect to the receptacles (13) for the guide of the cutting elements (6) of the upper knife (4) by an amount x1 in the direction facing away from the bar back (1).

## Revendications

1. Système de coupe à doubles lames composé d'un dos (1) de barre contre lequel sont disposés un dos (2) de lame pour une lame supérieure (4) et un dos (3) de lame pour une lame inférieure (5), contre lesquels sont fixés une pluralité d'éléments de coupe (6, 7) à doubles lames, sachant que la lame supérieure (4) et la lame inférieure (5) sont entraînées de manière oscillante en va-et-vient et que contre le dos (1) de barre sont fixés des guide-lame (10) pour la lame supérieure (4) et des guide-lame (110) pour la lame inférieure (5), qui englobent des bras de guidage (11, 111), **caractérisé en ce que** les guide-lame (110) pour la lame inférieure (5) sont munis de guidages de limitation (9) composés respectivement d'un élément de friction (91) et d'une plaque de glissement (92), sachant que les éléments de friction (91) sont disposés contre les bras de guidage (111) des guide-lame (110) de la lame inférieure (5), et que les plaques de glissement (92) sont disposées sur le dos (1) de barre.

2. Système de coupe à doubles lames selon la revendication 1, **caractérisé en ce que** les éléments de friction (91) sont vissés contre les bras de guidage (111).

3. Système de coupe à doubles lames selon l'une des revendications précédentes, **caractérisé en ce que** les plaques de glissement (92) sont immobilisées par vissage ou bridage contre le dos (1) de barre.

4. Système de coupe à doubles lames selon l'une des revendications précédentes, **caractérisé en ce que** les éléments de friction (91) et les plaques de glissement (92) sont en acier trempé.

5. Système de coupe à doubles lames selon l'une des revendications précédentes, **caractérisé en ce que** les éléments de friction (91) et les plaques de glissement (92) sont munis d'un revêtement réduisant l'usure.

6. Système de coupe à doubles lames selon l'une des revendications précédentes, **caractérisé en ce que** les éléments de friction (91) sont configurés en plusieurs parties.

7. Système de coupe à doubles lames selon l'une des revendications précédentes, **caractérisé en ce que** les éléments de friction (91) sont formés par une vis sans tête (913) dont l'extrémité regardant la plaque de glissement (92) pénètre dans un disque d'appui (914).

8. Système de coupe à doubles lames selon la revendication 7, **caractérisé en ce que** la vis sans tête (913) présente un rétrécissement en son extrémité regardant la plaque de glissement (92), rétrécissement qui pénètre dans un trou borgne dans le disque d'appui (914).

9. Système de coupe à doubles lames selon l'une des revendications précédentes, **caractérisé en ce que** contre les extrémités - ne regardant pas le dos (1) de barre - des bras de guidage (11, 111) sont prévus des logements (13, 113) pour guider les éléments de coupe (6, 7).

10. Système de coupe à doubles lames selon la revendication 9, **caractérisé en ce que** les logements (113) servant à guider les éléments de coupe (7) de la lame inférieure (5) sont décalés d'un quantum x1 dans la direction opposée au dos (1) de barre, par rapport au logements (13) servant à guider les éléments de coupe (6) de la lame supérieure (4).
